# EUROPÄISCHE PATENTSCHRIFT

(11) **EP 0 427 037 B1**
(45) Veröffentlichungstag und Bekanntmachung des Hinweises auf die Patenterteilung: **24.08.1994**
(21) Anmeldenummer: 90120183.0
(22) Anmeldetag: 20.10.1990
(51) Int. Cl.: G01N 21/37

(54) **Nichtdispersiver Infrarot-Gasanalysator zur gleichzeitigen Messung der Konzentration mehrerer Komponenten einer Gasprobe**
Non-dispersive infrared gas analyzer for simultaneously measuring the concentration of multiple components of a gas sample
Analyseur de gaz, non dispersif à rayons infrarouges pour mesurer de façon simultanée la concentration de plusieurs composants d'un échantillon de gaz

(30) Priorität: 08.11.1989 DE 3937141
(43) Veröffentlichungstag der Anmeldung: 15.05.1991
(73) Patentinhaber: Hartmann & Braun Aktiengesellschaft, 60484 Frankfurt am Main (DE)
(72) Erfinder: Fabinski, Walter, W-6239 Kriftel (DE)
(74) Vertreter: Meissner, Peter E., Dipl.-Ing.

(56) Entgegenhaltungen:
- DE-A- 3 026 953
- US-A- 4 692 622

## Beschreibung

Die Erfindung betrifft einen nichtdispersiven Infrarot-Gasanalysator zur gleichzeitigen Messung der Konzentration mehrerer Komponenten einer Gasprobe.

Bei der Gasanalyse ist häufig die Aufgabe zu lösen, zwei oder mehr Meßkomponenten zu messen, die sich im Meßbereichsumfang unterscheiden. Beispielsweise sind bei der Messung von Automobilabgasen die CO- und die CO₂-Konzentrationen zu bestimmen, deren Anteile beim Rohabgas bei 1 Vol% CO und bei 16 Vol% CO₂ liegen.

Die Schwierigkeit dieser Meßaufgabe besteht darin, daß der auf der Absorption von Strahlung beruhende Meßeffekt bekanntlich einer nichtlinearen Funktion gehorcht. Daraus folgt, daß die Küvettenlänge des Gasanalysators dem Meßbereich für das jeweils zu messende Gas angepaßt sein muß, um einerseits einen ausreichenden Meßeffekt und andererseits eine nicht zu stark gekrümmte Kennlinie zu erhalten. Eine Linearisierung der Ausgangscharakteristik des Strahlungsdetektors kann in bekannter Weise mit elektronischen Hilfsmitteln realisiert werden.

Zur Lösung dieser Meßaufgabe wird für die Messung einer jeden einzelnen Komponente entweder ein eigenes Meßgerät oder ein Meßgerät mit zwei unabhängigen Meßsystemen eingesetzt. Dieses Verfahren ist aufwendig und wegen der Vielzahl von Funktionen anfällig gegen Ausfall von Baugruppen. (DE-PS 32 43 301)

Der Erfindung liegt die Aufgabe zugrunde, den Aufwand für die Messung mehrerer Komponenten in einem Gasgemisch zu reduzieren und die Verfügbarkeit des Meßsystems zu erhöhen. Die Aufgabe ist mit den im Anspruch 1 angegebenen Merkmalen erfindundsgemäß gelöst.

Es wird ein Gasanalysator zugrundegelegt, der einen Infrarotstrahler mit einem Modulator für die Lichtstrahlen und zwei nebeneinanderliegenden Küvetten für die Gasprobe und ein Vergleichsgas verwendet. Beide Küvetten sind gleich lang. Für das eingangs genannte Beispiel sei die Küvettenlänge mit 20 mm der Konzentration von 1 Vol% Meßbereichsumfang für das CO-Gas angepaßt und stellt für sich ein dem Stand der Technik entsprechendes Meßsystem dar.

Zur gleichzeitigen Ermittlung von 16 Vol% CO₂ wird kein zweiter Strahlengang aufgebaut, sondern das Meßsystem für die CO-Messung weitgehend mitbenutzt. Dadurch entfallen weitere physikalische und elektronische Funktionsgruppen; die Verfügbarkeit des Meßsystems wird erhöht.
Die Selektivierung der Messung erfolgt in mit der Meßkomponente gefüllten optopneumatischen Strahlungsempfängern. Ein erster Strahlungsempfänger für die CO-Messung ist direkt hinter den Küvetten angebracht, der an der Vorder- und an der Rückseite mit für Infrarotstrahlung transparenten Fenstern ausgebildet ist. Die verbleibenden Lichtstrahlen fallen durch den Strahlungsempfänger hindurch und gelangen über ein Strahlungsfilter in einen ebenso ausgebildeten zweiten Strahlungsempfänger, der entsprechend der Meßaufgabe in dem hier aufgeführten Beispiel mit CO₂-Gas gefüllt ist.
Die gewählte Küvettenlänge erlaubt eine ausreichende Empfindlichkeit und eine Kurvenkrümmung der Ausgangscharakteristik, die sich mit herkömmlichen Mitteln einfach linearisieren läßt.

Für die Linearisierbarkeit der zweiten Komponente, in diesem Fall CO₂, sind die Küvetten jedoch zu lang gewählt. Eine lineare Ausgangscharakteristik läßt sich ohne komplizierten Aufwand nicht mehr erreichen. Dafür ist neben der zu langen Küvette als weiterer Grund noch die größere Extinktion von CO₂ gegenüber CO im mittleren Infrarotlicht zu nennen. Sie ist zurückzuführen auf starke Banden innerhalb des Absorptionsspektrums.

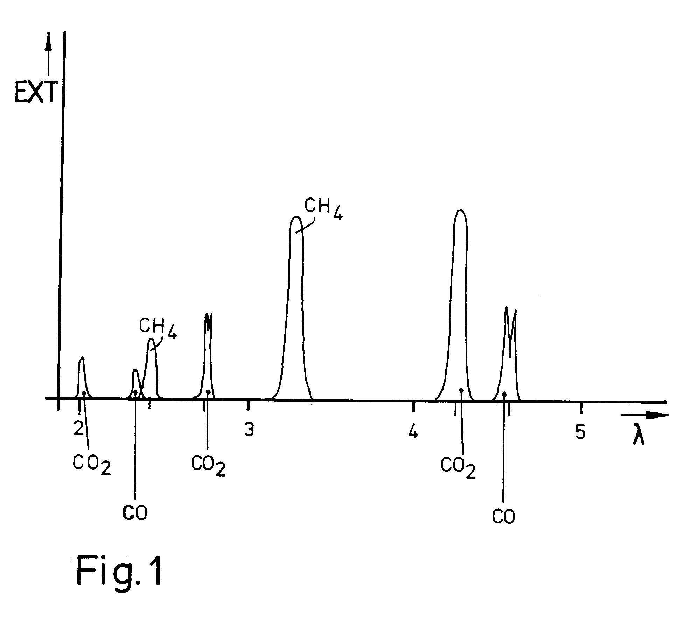

**Figur 1** zeigt hierzu zur Verdeutlichung die spektrale Verteilung der einzelnen Banden von CO, CO₂ und CH₄ mit ihrer jeweiligen Extinktion **EXT** im mittleren Infrarotlicht von 2 bis 5 »m der Wellenlänge λ.

Um die gestellte Aufgabe dennoch zu lösen, wird vor dem CO₂-Empfänger ein Strahlungsfilter in den Strahlengang gestellt. Dieses verhindert den Einfall von Strahlung in den CO₂-Empfänger im Bereich hoher Extinktion . Vorzugsweise wird für das hier angesprochene Beispiel die Bande bei λ =4,2 »m ausgeblendet. Die verbleibenden Absorptionsbanden von CO₂ bei λ =2,6 »m und λ=2,0 »m erlauben bei einer Küvettenlänge von 20 mm einen ausreichenden Meßeffekt bei gleichzeitiger Linearisierbarkeit der Kennlinie.

Je nach Meßaufgabe kann der gewünschte Meßbereichsumfang durch Wahl eines entsprechenden Strahlungsfilters realisiert werden. Dabei ist auch erlaubt, noch weitere Komponenten durch Aufbau weiterer Empfänger in Serie zu den ersteren zu messen.

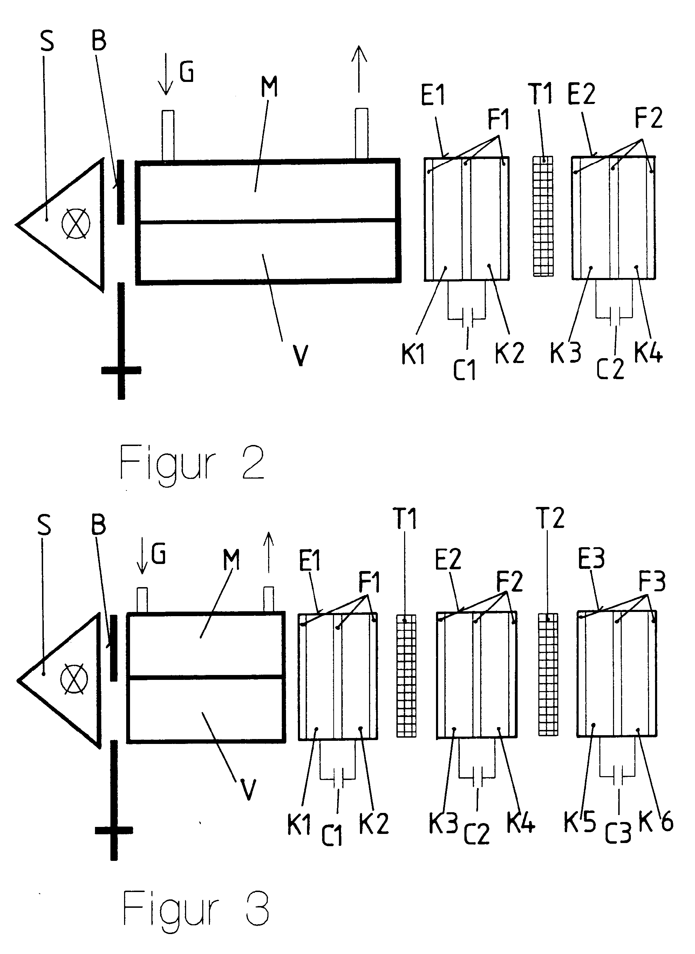

Die Erfindung wird anhand der in den Figuren 2 und 3 dargestellten Ausführungsbeispiele näher erläutert. Es zeigt
**Figur 2** den Aufbau eines nichtdispersiven Infrarot-Gasanalysators zur Messung von zwei Komponenten in einer Gasprobe und
**Figur 3** den Aufbau eines nichtdispersiven Infrarot-Gasanalysators zur Messung von drei Komponenten in einer Gasprobe

Bei dem nichtdispersiven Infrarot-Gasanalysator gemäß **Figur 2** mit einem Infrarotstrahler **S**, mit dem zur Modulation der Lichtstrahlen dienenden Blendenrad **B**, mit der mit Vergleichsgas gefüllten Küvette **V** und mit der von der zu bestimmenden Gasprobe **G** durchströmten Küvette **M** ist hinter den Küvetten **M** und **V** ein erster pneumatischer Strahlungsempfänger **E1** mit dem Membrankondensator **C1** angeordnet. Der Strahlungsempfänger **E1** besitzt zwei in Strahlungsrichtung der die Küvetten **M** und **V** durchdringenden Lichtstrahlen hintereinander angeordnete Kammern **K1** und **K2**, die mit einer ersten Komponente der Gasprobe **G** gefüllt sind, beispielsweise mit CO-Gas.

Der Strahlungsempfänger **E1** dient somit zur Bestimmung von CO in der Gasprobe **G**. Die in den Kammern **K1** und **K2** eingeschlossenen CO-Gasmengen erwärmen sich durch Absorption der sie durchdringenden Lichtstrahlen unterschiedlich stark. In der vorderen Kammer **K1** entsteht ein höherer Gasdruck als in der hinteren Kammer **K2**. Die auftretende Druckdifferenz wird mit Hilfe des Membrankondensators **C1** von einem nicht dargestellten Verstärker gemessen und sie stellt ein Maß für die CO-Konzentration in der Gasprobe **G** dar.

Die Kammern **K1** und **K2** sind mit für die Lichtstrahlen transparenten Fenstern **F1** versehen. Infolgedessen treffen die den ersten Strahlungsempfänger **E1** verlassenden Lichtstrahlen auf einen zweiten baugleichen pneumatischen Strahlungsempfänger **E2**, der in Strahlungsrichtung der Lichtstrahlen hinter dem ersten Strahlungsempfänger **E1** angeordnet ist. Seine beiden Kammern **K3** und **K4** sind mit einer zweiten Komponente der Gasprobe **G** gefüllt, beispielsweise mit CO₂-Gas. Die vordere Kammer **K3** ist mit für die Lichtstrahlung durchlässigen Fenstern **F2** abgeschlossen, die in ihren optischen Eigenschaften den Fenstern **F1** gleichen können.

Im Strahlengang zwischen den beiden Strahlungsempfängern **E1** und **E2** ist ein Strahlungsfilter **T1** angeordnet, das für Lichtstrahlen durchlässig ist, deren Wellenlängen λ sich im Bereich einer Absorptionsbande des CO₂-Spektrums befinden, die außerhalb der Grundbande von CO₂ liegt, d.h. einer Absorptionsbande mit schwacher oder schwächerer Extinktion **EXT** als die der Grundbande von CO₂, die bei einer Wellenlänge λ=4,2 »m liegt. So kann das Strahlungsfilter **T1** ein Interferenzfilter sein, dessen Lichtdurchlässigkeit für die Bande der ersten Oberwelle des CO₂-Spektrums bei λ=2,6 »m liegt. Der Strahlungsempfänger **E2** ist unter dieser Voraussetzung zur Bestimmung der Komponente CO₂ in der Gasprobe **G** geeignet. Die in den Kammern **K3** und **K4** auftretende Druckdifferenz als Folge der Absorption der Lichtstrahlen im Wellenlängenbereich um λ=2,6 »m durch die eingeschlossenen CO₂-Gasmengen wird auch hier mit Hilfe eines Membrankondensators **C2** von einem nicht dargestellten Verstärker gemessen; sie stellt ein Maß für die CO₂-Konzentration in der Gasprobe **G** dar.

**Figur 3** zeigt einen nichtdispersiven Infrarot-Gasanalysator, der eine erweiterte Ausführungsform des in **Figur 2** dargestellten Gasanalysators zur gleichzeitigen Messung von drei Komponenten einer Gasprobe beinhaltet. Gleichartige Elemente sind mit gleichen Bezugszeichen versehen.
Im Strahlengang der Lichtstrahlen hinter dem Strahlungsempfänger **E1** und dem Strahlungsempfänger **E2** ist ein weiterer Strahlungsempfänger **E3** vorgesehen. Bleibt man bei dem gewählten Meßbeispiel, so ist der Strahlungsempfänger **E1** zur Bestimmung von CO, der Strahlungsempfänger **E2** zur Bestimmung von CO₂ und der neue Strahlungsempfänger **E3** zur Bestimmung einer dritten Komponente des Probengases **G**, beispielsweise CH₄, bestimmt. Damit die Strahlung nach Durchdringung der Küvetten **M** und **V**, des Strahlungsempfänger **E1**, des Strahlungsfilter **T1** und des Strahlungsempfänger **E2** auch noch den Strahlungsempfänger **E3** durchstrahlt, sind der Strahlungsempfänger **E2** und die vordere Kammer **K5** des Strahlungsempfänger **E3** jeweils mit lichtdurchlässigen Fenstern **F2** und **F3** versehen.

Zwischen den Strahlungsempfängern **E2** und **E3** ist ein Strahlungsfilter **T2** angeordnet, dessen Transparenz für Lichtstrahlen, die im Durchlaßbereich des ersten Strahlungsfilter **T1** enthalten sein muß, bei der Absorptionsbande von CH₄ im Bereich einer Wellenlänge λ von 2,5 »m liegt.

Die gezeigte Anordnung ist somit in der Lage, unter Verwendung nur einer Küvettenanordnung aus einer Gasprobe gleichzeitig drei verschiedene Komponenten - CO, CO₂ und CH₄ - zu messen. Die Erfindung beschränkt sich jedoch nicht auf die hier gezeigten Ausführungsbeispiele. Zur Bestimmung weiterer Komponenten einer Gasprobe ist eine entsprechende Anzahl weiterer baugleicher Strahlungsempfänger im Strahlengang hinter die vorhandenen Strahlungsempfänger einzusetzen. Einzige Bedingung für die zwischen den Strahlungsempfängern anzuordnenden Strahlungsfilter ist, daß deren Durchlaßbereich sich im Durchlaßbereich der davor angeordneten Strahlungsfilter befinden muß, damit die Lichtstrahlen auch in die hinterste Kammer des letzten Strahlungsempfängers gelangen kann.

## Patentansprüche

1. Nichtdispersiver Infrarot-Gasanalysator zur gleichzeitigen Messung der Konzentration einer ersten und wenigstens einer zweiten Komponente einer Gasprobe, welche zweite Komponente einen Wellenlängebereich hoher Strahlungsabsorption und einen Wellenlängebereich schwächerer Strahlungsabsorption aufweist, mit zwei nebeneinanderliegenden Küvetten (M, V), denen die Gasprobe (G) bzw. ein Vergleichsgas zugeführt wird und die von modulierten Lichtstrahlen eines Infrarotstrahlers (S) durchdrungen werden, welche Lichtstrahlen nach teilweiser Absorption in den Küvetten auf einen hinter den Küvetten angeordneten ersten pneumatischen Strahlungsempfänger (E1) mit zwei in Strahlungsrichtung hintereinander angeordneten Kammern (K1, K2) fallen, in denen die erste Komponente der Gasprobe (G) enthalten ist und die Kammern für die Lichtstrahlen transparente Fenster (F1) über den Strahlenquerschnitt aufweisen, welcher Gasanalysator weiter einen mit dem ersten pneumatischen Strahlungsempfänger baugleichen zweiten pneumatischen Strahlungsempfänger (E2) aufweist, der hinter dem ersten Strahlungsempfänger (E1) angeordnet, und dessen kammern (K₃, K₄) mit der zweiten Komponente der Gasprobe (G) gefüllt ist, wobei zwischen dem ersten (E1) und dem zweiten Strahlungsempfänger (E2) ein Strahlungsfilter (T1) eingesetzt ist mit einer Transparenz für die Lichtstrahlen im Bereich der schwächeren Strahlungsabsorption der zweiten Komponente der Gasprobe (G).

2. Nichtdispersiver Infrarot-Gasanalysator nach Anspruch 1, dadurch gekennzeichnet, daß weitere baugleiche Strahlungsempfänger (E3) zur Messung weiterer Komponenten der Gasprobe (G) in Strahlengang hinter die vorgenannten Empfängern eingesetzt werden, denen Strahlungsfilter (T2) im Überlappungsbereich des ersten Strahlungsfilters (T1) vorgeschaltet sind.

3. Nichtdispersiver Infrarot-Gasanalysator nach Anspruch 1 oder Anspruch 2, dadurch gekennzeichnet, daß die Strahlungsfilter Interferenzfilter sind.

## Claims

1. Non-dispersive infrared gas analyzer for simultaneously measuring the concentration of a first and at least a second component of a gas sample, which second component has one wavelength range of a high radiation absorption and one wavelength range of a weaker radiation absorption, with two cells (M, V), which are disposed side by side, to which the gas sample (G) or a reference gas is supplied and which are penetrated by modulated light rays of an infrared radiator (S), which light rays fall, following partial absorption in the cells, on a first pneumatic radiation detector (E1), which is arranged after the cells and comprises two chambers (K1, K2), which are arranged one after the other in the direction of radiation, in which the first component of the gas sample (G) is contained and which comprise windows (F1), which are transparent to the light rays, over the ray cross section, which gas analyzer also comprises a second pneumatic radiation detector (E2), which is of the same construction as the first pneumatic radiation detector, is arranged after the first radiation detector (E1) and the chambers (K3, K4) of which are filled with the second component of the gas sample (G), a radiation filter (T1) being inserted between the first (E1) and the second radiation detector (E2), which filter is transparent to the light rays in the weaker radiation absorption range of the second component of the gas sample (G).

2. Non-dispersive infrared gas analyzer according to claim 1, characterised in that further radiation detectors (E3) of the same construction are inserted in the path of the rays after the above-mentioned detectors to measure further components of the gas sample (G), upstream of which detectors (E3) radiation filters (T2) are connected in the overlap region of the first radiation filter (T1).

3. Non-dispersive infrared gas analyzer according to claim 1 or 2, characterised in that the radiation filters are interference filters.

## Revendications

1. Analyseur de gaz à infrarouge non dispersif pour la mesure simultanée de la concentration d'un premier et d'au moins un second composant d'un échantillon gazeux, lequel second composant présente une zone de longueur d'onde de plus forte absorption de rayonnement et une zone de longueur d'onde de plus faible absorption de rayonnement, comportant deux cuves adjacentes (M,V), auxquelles l'échantillon gazeux (G) ou un gaz de comparaison est amené et qui sont traversées par des rayons lumineux modulés d'un émetteur à infrarouge (S), lesquels rayons lumineux, après absorption partielle dans les cuves, tombent sur un premier récepteur de rayonnement pneumatique (E1) agencé derrière les cuves comportant deux chambres (K1,K2) agencées l'une derrière l'autre dans la direction du rayonnement, dans lesquelles le premier composant de l'échantillon gazeux (G) est contenu, et les chambres présentent des fenêtres (F1) transparentes pour les rayons lumineux sur la section transversale des rayons, lequel analyseur de gaz présente de plus un second récepteur de rayonnement pneumatique (E2) de même structure que le premier récepteur de rayonnement pneumatique, qui est agencé derrière le premier récepteur de rayonnement (E1) et dont les chambres (K3,K4) sont remplies du second composant de l'échantillon gazeux (G), un filtre de rayonnement (T1) étant prévu entre le premier récepteur de rayonnement (E1) et le second récepteur de rayonnement (E2) ayant une transparence pour les rayons lumineux dans la zone de la plus faible absorption de rayonnement du second composant de l'échantillon gazeux (G).

2. Analyseur de gaz à infrarouge non dispersif selon la revendication 1,
caractérisé en ce que d'autres récepteurs de rayonnement (E3) de même structure sont prévus dans le trajet des rayons derrière les récepteurs précités pour mesurer d'autres composants de l'échantillon gazeux (G), dont les filtres de rayonnement (T2) sont montés en amont dans la zone de chevauchement du premier filtre de rayonnement (T1).

3. Analyseur de gaz à infrarouge non dispersif selon la revendication 1 ou la revendication 2,
caractérisé en ce que les filtres de rayonnement sont des filtres d'interférence.
